# EUROPÄISCHE PATENTSCHRIFT

(11) **EP 1 529 605 B1**
(45) Veröffentlichungstag und Bekanntmachung des Hinweises auf die Patenterteilung: **29.12.2010**
(21) Anmeldenummer: 04026013.5
(22) Anmeldetag: 03.11.2004
(51) Int. Cl.: B25J 9/16

(54) **Verfahren und Vorrichtung zum Steuern von Robotern**
Method and system for control of robots
Procédé et système de commande des robots

(30) Priorität: 05.11.2003 DE 10351670
(43) Veröffentlichungstag der Anmeldung: 11.05.2005
(73) Patentinhaber: KUKA Roboter GmbH, 86165 Augsburg (DE)
(72) Erfinder: Stoddard, Kenneth A., Rochester MI 48306 (US); Martin, David, Oakland TWP, MI 48306 (US)
(74) Vertreter: Lempert, Jost

(56) Entgegenhaltungen:
- WO-A-02/18073
- DE-U1- 29 909 047
- US-A- 4 785 528
- US-A- 4 954 952
- US-A1- 2003 171 847
- US-B1- 6 317 651

## Beschreibung

Die Erfindung betrifft ein Verfahren zum Steuern eines Roboters gemäß dem Oberbegriff des unabhängigen Patentanspruches 1 und eine Vorrichtung gemäß dem Oberbegriff des unabhängigen Patentanspruches 6.

Ein Verfahren bzw. eine Vorrichtung der oben genannten Art ist aus der US 2003/171847 bekannt.

Aus der US-A-4,785,528 ist ein Positionierungssystem für eine Roboterarbeit bekannt, das aus einem Roboter und einen antriebsfreien Roboterarm besteht. Der Roboter und der antriebsfreie Roboterarm sind über Kugelgelenke mit einer Last verbunden, so dass eine genaue Positionierung der Last ohne umfangreiche Zusatzwerkzeuge ermöglicht ist.

Es ist bekannt, dass in manchen Fällen, in denen zwei oder mehr Roboter ein Teil tragen (Lastenteilung), der Gesamt-Arbeitsbereich für das Teil gegenüber dem Arbeitsbereich reduziert sein kann, der erreichbar ist, wenn das Teil von einem einzelnen Roboter getragen wird. Das liegt daran, dass die Roboter sich bei verschiedenen Orientierungen des Teils gegenseitig stören können und dass die zwei oder mehreren Roboter nicht am selben Ort platziert sind. Daher ist eine Trajektorie, die mit einem Roboter erreichbar ist, manchmal durch die anderen nicht ebenso erreichbar.

Gleichzeitig ist es gut bekannt, dass der Geschicklichkeits-Arbeitsbereich - der Bereich, in dem alle Orientierungen erreicht werden können - in der Regel kleiner ist, als der Ungeschicklichkeits-Arbeitsbereich.

Bei der Lastenteilung ist die Orientierung des Teils nur durch den Ort der Zugriffspunkte der einzelnen Roboter bestimmt. Der Begriff "Ort" bezieht sich auf den Dreiervektor, der die x-, y- und z-Koordinaten eines Objekts relativ zu einem Bezugssystem angibt. Der Begriff "Orientierung" bezieht sich auf die drei Drehungen eines Objekts um die x-, y-, und z-Achsen relativ zu einem Referenzsystem. Die Stellung eines Objekts im Raum beinhaltet sowohl seinen Ort als auch seine Orientierung, und entsprechend bezieht sich der Begriff "Stellung" auf die Kombination von Ort und Orientierung. Es werden sechs Zahlen benötigt, um die Stellung eines Objekts im Raum anzugeben, drei zur Darstellung des Ortes und drei zur Darstellung der Drehungen.

Wenn ein Objekt im Raum schwebt, ist es "frei", sich in allen sechs Richtungen zu bewegen; es besitzt sechs Freiheitsgrade (DOF) der Bewegung. Wenn ein Roboter das Objekt mit einem Standardgreifer ergreift, beschränkt er normalerweise dessen Bewegung in allen sechs Freiheitsgraden.

Der von mehr als einem einzelnen Roboter unternommene Versuch, das Teil auch zu orientieren, ist überbeschränkt, d.h. zwei Roboter, die ein Teil ergreifen, können das Teil oder sich selbst beschädigen, da sie jeweils versuchen, alle sechs Freiheitsgrade festzulegen.

Es existieren verschiedene Arten von singulären Stellungen, in die sich Roboter bewegen können. Hier ist jedoch diejenige Art von Singulärstellung von vordringlichem Interesse, in der der Roboter einen Steuerungs-Freiheitsgrad verliert und zur gleichen Zeit eine unendliche Anzahl von Lösungen für diese Stellung besitzt. Ein gängiges Beispiel hierfür ist jede Stellung, in der die Handgelenksachsen so angeordnet sind, dass die Drehachsen zweier Gelenke kolinear sind. In einem solchen Punkt existiert eine unendliche Anzahl von Werten für eines der beiden Gelenke, für die ein entgegengesetzter Wert des anderen Gelenks existiert, so dass die Werkzeugspitze exakt dieselbe Stellung beibehält. Dies bedeutet zugleich, dass eine Drehachse existiert, bezüglich derer der Roboter sich nicht weiter bewegen kann. Er hat diesen Steuerungs-Freiheitsgrad verloren.

Wenn sich ein Roboter in unmittelbarer Nähe zu einer solchen Singularität bewegt, müssen zumindest zwei der Handgelenks-Gelenke sehr schnell drehen, damit sich die Werkzeugspitze auch nur langsam bewegt. Gewöhnlich werden die Handgelenks-Gelenke bei dem Versuch, eine konstante Geschwindigkeit der Werkzeugspitze beizubehalten, versuchen, sich mit einer Geschwindigkeit oberhalb ihrer Grenzgeschwindigkeiten zu bewegen, und die Werkzeugspitze muss entweder abbremsen, oder der Roboter muss die gewünschte Trajektorie verlassen oder stoppt aufgrund eines Geschwindigkeitsbegrenzungs-Fehlers.

Das Problem wird noch verschärft, wenn zwei oder mehr Roboter dasselbe Teil tragen und einer von ihnen in die Nähe einer singulären Stellung kommt. Er wird langsamer verfahren oder anhalten müssen, so dass die anderen ebenfalls langsamer verfahren oder anhalten müssen, was in genau der gleichen Weise zu geschehen hat. Es ist schwierig, diesen Anforderungen derart gerecht zu werden, dass keine Verformungskräfte auf das Teil einwirken. Wenn beispielsweise zwei Roboter einen Wassereimer tragen, wird mit Sicherheit Wasser aus dem Eimer herausspritzen, selbst wenn dieser ohne Zerbrechen abgebremst werden kann!

Wenn zwei oder mehr Roboter eine geteilte Last tragen und ihre Orientierung relativ zu dieser Last festgelegt ist, verkleinert sich der Arbeitsbereich der koordinierten Gruppe in manchen Fällen gegenüber dem Arbeitsbereich, den ein einzelner Roboter beim Tragen derselben Last haben würde. Das liegt daran, dass die Roboter sich bei verschiedenen Orientierungen des Teils stören können und dass die Roboter nicht am selben Ort platziert sind. Daher kann das Teil in gewisser Weise nur im Schnittbereich der Arbeitsbereiche der Roboter bewegt werden, die sich die Last teilen.

Weiterhin ist in dem Fall, dass zwei oder mehr Roboter dasselbe Teil tragen, wobei jeder Roboter versucht, alle sechs Freiheitsgrade des Teils festzulegen, dieses hinsichtlich seiner Stellung überbeschränkt. Dies ist der heutige Stand der Technik bei der Lastenteilung.

Es besteht Bedarf, sowohl den verfügbaren Arbeitsbereich bei der Lastenteilung zu vergrößern, als auch die Überbeschränktheit zu reduzieren.

Außerdem sollte es aufgrund der verfügbaren zwölf Freiheitsgrade bei zwei Robotern, die ein Teil tragen (oder achtzehn Freiheitsgraden, wenn drei Roboter ein Teil tragen) möglich sein, dass redundante Freiheitsgrade existieren, so dass Singularitäten vermieden werden können.

Unter Berücksichtigung der vorstehend aufgeführten Gesichtspunkte ist die Aufgabe der Erfindung, ein Verfahren der eingangs genannten Art derart zu verbessern, dass der verfügbare Arbeitsbereich vergrößert und Singularität vermieden werden kann, da jeder Roboter einen verbesserten Gebrauch seines "ungeschickten" Arbeitsbereichs machen kann, und Spannungen in dem Teil und in den Robotern aufgrund von Überbeschränktheit zu reduzieren.

Es ist weiterhin eine Aufgabe der Erfindung, eine Vorrichtung der eingangs genannten Art derart zu verbessern, dass der verfügbare Arbeitsbereich vergrößert und Singularität vermieden werden kann.

Die Aufgabe wird erfindungsgemäß gelöst durch ein Verfahren zum Steuern eines Roboters während einer Interpolation einer Trajektorie oder Bewegung zu einer vorbestimmten Stellung, beinhaltend die Schritte a) Ignorieren von wenigstens einem der drei ursprünglich vorbestimmten oder interpolierten Orientierungswerte einer Werkzeugspitze; b) Auffinden neuer Orientierungswerte der Werkzeugspitze, wobei c) die ursprünglich vorbestimmten oder interpolierten Ortswerte der Werkzeugspitze beibehalten werden, und wobei die neuen Orientierungswerte den Handgelenkspunkt des Roboters möglichst nah an dessen Basis platzieren, und die ursprünglich vorbestimmten oder interpolierten, nicht ignorierten Orientierungswerte der Werkzeugspitze beibehalten werden

Die Aufgabe wird weiterhin erfindungsgemäß gelöst durch eine Vorrichtung zum Steuern eines Roboters zur Verwendung während einer Interpolation eines Trajektorie oder Bewegung zu einer vorbestimmten Stellung, das ausgebildet ist a) zum Ignorieren wenigstens einer der drei ursprünglich vorbestimmten oder interpolierten Orientierungswerte der Werkzeugspitze; b) Auffinden neuer Orientierungswerte der Werkzeugspitze, unter c) Beibehaltung der ursprünglich vorbestimmten oder interpolierten Ortswerte der Werkzeugspitze, wobei eine Platzierung des Handgelenkspunktes des Roboters möglichst nah an dessen Basis durch die neuen Orientierungswerte, und eine Beibehaltung der ursprünglich vorbestimmten oder interpolierten, nicht ignorierten Orientierungswerte der Werkzeugspitze vorgesehen sind. Nach einer bevorzugten Ausgestaltung werden die Orientierungswerte der Werkzeugspitze gemäß Schritt b) durch einen Weiten-Minimierungsalgorithmus bestimmt.

Weiterhin umfasst die Erfindung ein Verfahren und ein System zum Tragen einer Last mit wenigstens zwei Robotern, wobei die Verbindung eines Roboter mit der Last über ein Kardangelenk, ein Kugelgelenk oder ein Scharniergelenk erfolgt. Auf diese Weise schlägt die Erfindung eine neue Möglichkeit vor, wie mehrere Roboter ein Objekt ergreifen und bewegen können.

Die Orientierung kann um alle drei Achsen frei rotieren oder in einem Freiheitsgrad beschränkt sein, wobei sie jedoch um zwei Achsen frei rotieren kann, oder sie kann in zwei Freiheitsgraden beschränkt sein, wobei sie jedoch um eine einzelne Achse frei rotieren kann, so dass in jedem dieser Fälle die freien Achsen bzw. die freie Achse gemäß dem Schritt a) ignoriert werden können bzw. kann.

Entsprechend handelt es sich bei den eingesetzten Mitteln vorzugsweise um ein Kugelgelenk, ein Scharniergelenk oder ein Kardangelenk.

Vorteilhafterweise ist weiterhin gezeigt, ein verfahren zum Tragen einer Last mit wenigstens zwei Robotern, bei dem die Verbindung wenigstens eines Roboters mit der Last über ein Kardangelenk erfolgt, wobei ein Steuern wenigstens eines der Roboter während der Interpolation einer Trajektorie beinhaltet:
a) Ignorieren von wenigstens einem der drei ursprünglich vorbestimmten oder interpolierten Orientierungswerte einer Werkzeugspitze,
b) Auffinden neuer Orientierungswerte der Werkzeugspitze, die den Handgelenkspunkt des Roboters möglichst nah an dessen Basis platzieren, wobei
c) die ursprünglich vorbestimmten oder interpolierten Ortswerte der Werkzeugspitze beibehalten werden und
d) die ursprünglich vorbestimmten oder interpolierten, nicht ignorierten Orientierungswerte der Werkzeugspitze beibehalten werden.

Alternativ kann im Rahmen von Weiterentwicklungen des vorstehend genannten, erfindungsgemäßen Verfahrens die Verbindung von wenigstens einem Roboter mit der Last über ein Scharniergelenk oder ein Kugelgelenk erfolgen. Auf diese Weise kombiniert die Erfindung einige der vorstehend genannten Vorteile.

Ein Wegfall der Erfordernis eines oder mehrerer Freiheitsgrade der Orientierungssteuerung liefert auch wenigstens einen Freiheitsgrad für redundante Lösungen für jeden Roboter, d.h. ein Roboter kann eine gegebenen Stellung auf mehr als eine Weise erreichen (unter Verwendung einer beliebigen Orientierung). Dieser Umstand lässt sich ausnutzen, um Singularitäten bei der Lastenteilung zu vermeiden.

Das Singularitäten-Problem lässt sich durch Verwendung einer Trajektorie umgehen, die den gewünschten Stellungen folgt, aber ein Abweichen der Orientierung ermöglicht, so dass die singuläre Stellung vermieden werden kann. Dies ist das Wesen der vorliegenden Erfindung. Das Erleichtern der Orientierungs-Anforderungen für jeden Roboter hat den dreifachen Vorteil, dass dadurch 1) die Reichweite jedes Roboters vergrößert wird (durch Erlaubnis einer Nutzung des "ungeschickten" Arbeitsraumes), 2) Überbestimmtheiten des Teils reduziert werden und 3) der Bedarf reduziert wird, Roboter in die Nähe von singulären Stellungen zu bewegen.

Durch Erleichterung der Orientierungs-Anforderungen für jeden Roboter wird erfindungsgemäß der Arbeitsbereich dieses Roboters vergrößert, indem ihm erlaubt wird, sich in "ungeschickte" Bereiche seines Arbeitsbereichs zu bewegen, und die Überbeschränktheit des gemeinsamen Zustands mit dem Teil wird reduziert. Obwohl auf diese Weise nicht in allen Fällen gegenseitige Störungen zwischen den Robotern beseitigt sind, lassen sich die Störbereiche reduzieren, indem den Robotern erlaubt wird, ihre Zugriffspunkte mit unterschiedlichen Orientierungen zu erreichen.

Obwohl die Erfindung vorteilhafter Weise bei zwei oder mehr Lasten teilenden Robotern eingesetzt wird, existieren Fälle außerhalb der Lastenteilungs-Problematik, in denen Orientierung nicht wichtig ist und ein einzelner, ein Teil bewegender Roboter von einem ausgeweiteten Arbeitsbereich und einer Singularitäten-Vermeidung profitieren kann. Ein Beispiel hierfür ist das Fallenlassen eines Teils in einen Behälter, wobei es nur darauf ankommt, das Teil über dem Behälter zu platzieren. Es muss nicht ausgerichtet sein. Nach dem Stand der Technik wird zum Bestimmen der Gelenkwinkel eines Roboters bei gegebener Stellung der Werkzeugspitze ein sogenannter Rückwärtsrechnungs-Algorithmus verwendet. Der Rückwärtsrechnungs-Algorithmus wird für gewöhnlich eingesetzt, um die Gelenkwinkel zu bestimmen, die verwendet werden müssen, um eine beliebige, vorbestimmte kartesische Stellung zu erreichen, inklusive der interpolierten Stellungen, die bei einer Bewegung entlang einer kartesischen Trajektorie benutzt werden, beispielsweise einer geraden Linie oder einem Kreis.

Erfindungsgemäß wird die vorbestimmte kartesische Stellung jedes Roboter, inklusive während einer Interpolation vorbestimmter Stellungen, die sowohl Ort und Orientierung der Werkzeugspitzen eines jeden Roboters umfassen, in zwei Teile geteilt. Die durch die Trajektorie und das Werkzeug zwischen dem Roboter und dem Teil beschränkten Freiheitsgrade werden derart bestimmt, dass die Zwangsbedingungen erfüllt sind. Die verbleibenden, unbeschränkten Freiheitsgrade werden ausgehend von der vorbestimmten Stellung derart verändert, dass der Roboter eine größte mögliche Reichweite entlang einer gegebenen Trajektorie besitzt.

Dieser Algorithmus lässt sich als ein neues Rückwärtsrechnungs-Verfahren in Einzelroboter-Anwendungen einsetzen, in denen die Orientierung der Last nicht entscheidend ist, und er kann bei Lastenteilung mit mehreren Robotern eingesetzt werden, bei der die Lastorientierung nur durch den Ort der Werkzeugspitzen der die Last teilenden Roboter festgelegt werden kann und die Orientierung der Werkzeugspitze jedes Roboters je nach Werkzeugtyp in einem oder mehreren Freiheitsgraden frei ist.

Ein Beispiel einer Einzelroboter-Anmeldung ist, wie gesagt, die Überführung von Teilen in Behälter oder auf Fördermittel.

Bei der Lastenteilung wird das neue Rückwärtsrechnungs-Verfahren eingesetzt, um ein neues Verfahren zu unterstützen, bei dem ein abhängiger Roboter einem unabhängigen folgt. Die Begriffe "abhängig" und "unabhängig" beziehen sich auf Roboter in geometrisch koordinierter Bewegung, beispielsweise bei Lastenteilung, wie in der am 3. April 2003 von Stoddard et al. eingereichten US-Patentanmeldung 10/406,521 beschrieben. In diesem Fall basiert die tatsächliche Stellung der geteilten Last auf der vorbestimmten Stellung des unabhängigen Roboters. Der Ort des abhängigen Roboters wird auf normale Weise, basierend auf der vorbestimmten Stellung der geteilten Last bestimmt. Allerdings wird die Orientierung aller Werkzeugspitzen der die Last teilenden Roboter einschließlich sowohl der unabhängigen als auch der abhängigen Roboter gemäß des neuen Rückwärtsrechnungs-Verfahren bestimmt. Diese Technik wird mit jeder standardmäßigen, kartesischen Interpolation benutzt, die alle kartesischen Freiheitsgrade (x, y, z, A, B, C) interpoliert, beispielsweise lineare oder zirkulare Interpolation.

Der erfindungsgemäße Algorithmus zum Bestimmen der Orientierung jedes die Last teilenden Roboters wird als "Minimal-Weiten"-Lösung bezeichnet. Durch Minimieren des Abstands zwischen der Basis des Roboters und seinem Handgelenkspunkt (WCP, Wrist Center Point) für jeden Punkt entlang einer Trajektorie ist es dem WCP möglich, sich weiter fort entlang der Trajektorie zu bewegen, wodurch der Arbeitsbereich maximiert wird. Dieser Minimal-Weiten-Ansatz lässt sich für den WCP verwenden, da keine bestimmte Orientierung angenommen werden muss. D.h., für jeden Punkt entlang der Trajektorie darf sich die Orientierung der Werkzeugspitze (TCP) ändern, so dass der WCP näher an der Roboterbasis ist, als wenn die vorgegebene Orientierung verwendet würde. Der Algorithmus findet eine Lösung, die:
1) den gewünschten TCP-Ort erreicht (x, y, z des TCP),
2) eine Orientierung verwendet, so dass der WCP möglichst nahe dem Drehzentrum an der Roboterbasis ist.

Der Minimal-Weiten-Algorithmus variiert auf der Grundlage der Anzahl der aufgrund des Werkzeugs freigegebenen Freiheitsgrade und des Roboterdesigns. Im Folgenden werden Algorithmen erläutert, die für drei Werkzeugarten wirksam sind, wobei angenommen wird, dass es sich um einen Roboter mit einem Kugel-Handgelenk handelt, der keine Handgelenksoder Basis-/Vorderarm-Achsversatze aufweist. Lösungen für andere Roboterarten und für andere Werkzeugarten sind auch möglich.

### Kurze Beschreibung der Zeichnungen

Weitere Vorteile und Eigenschaften der Erfindung ergeben sich aus den Patentansprüchen und der folgenden Beschreibung von Ausführungsbeispielen der Erfindung unter Bezugnahme auf die Zeichnung. Es zeigt:

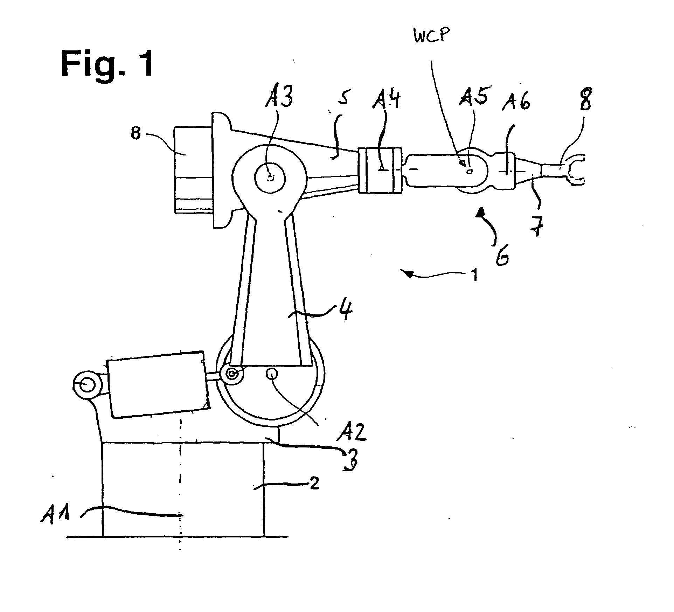

- Fig. 1: einen Industrieroboter, bei dem die Erfindung einsetzbar ist;
- Fig. 2a-2c: unterschiedliche Werkzeugarten mit verschiede- nen freien Freiheitsgraden; nämlich

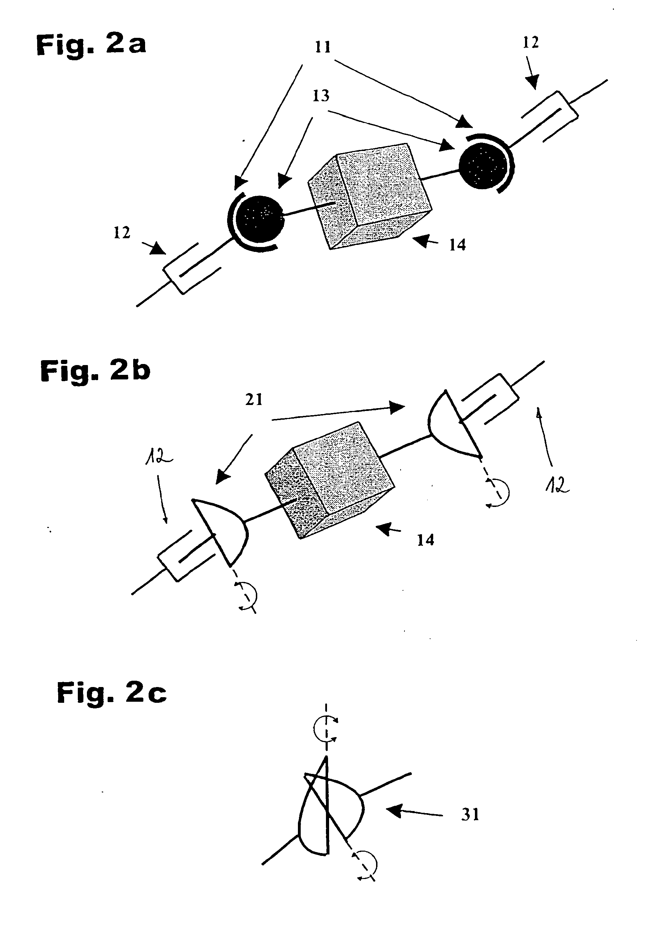

- Fig. 2a: ein Kugelgelenk, das Drehungen in allen drei Rotations-Freiheitsgraden ermöglicht;
- Fig. 2b: ein Scharniergelenk, das Drehungen in einem Freiheitsgrad ermöglicht;
- Fig. 2c: ein Kardangelenk, das Rotationen in zwei Frei- heitsgraden ermöglicht;

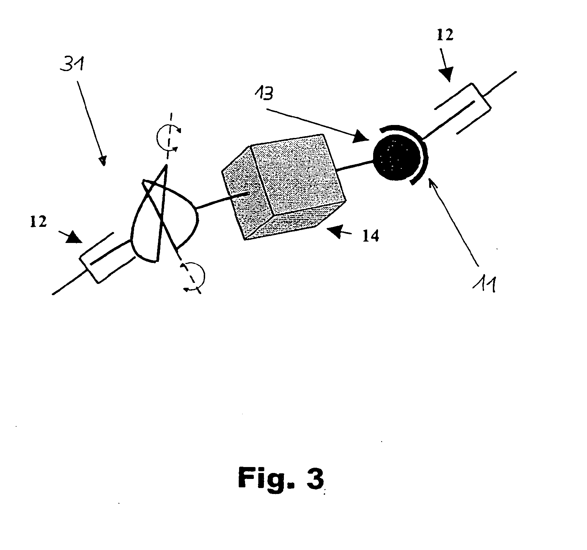

- Fig. 3: eine zwischen zwei Robotern geteilte Last mit unterschiedlichen Arten von Verbindungswerkzeu- gen;

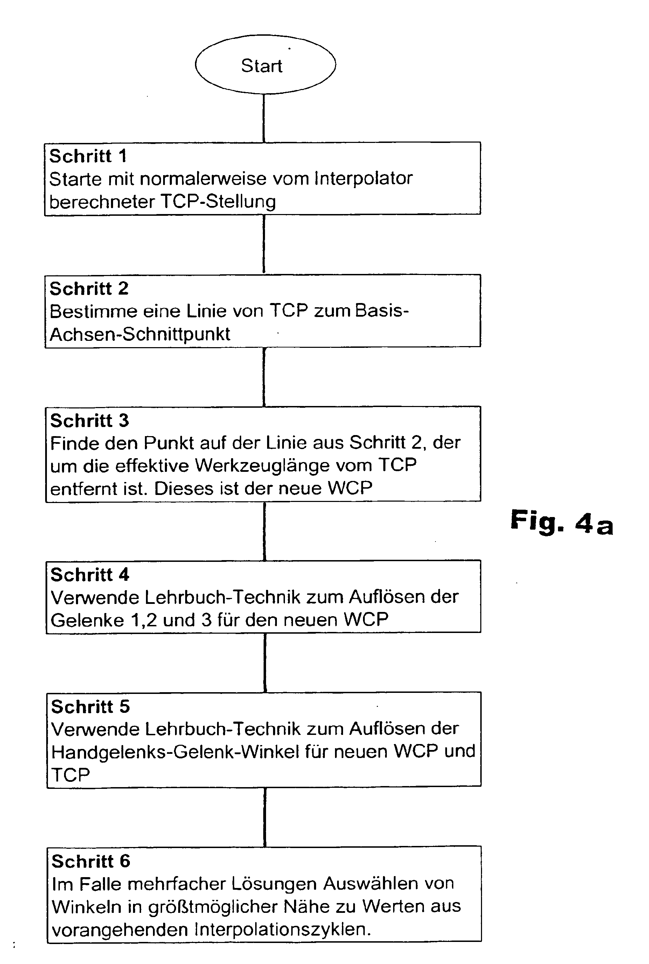

- Fig. 4a: ein Ablaufdiagramm des erfindungsgemäßen Algo- rithmus für zwei oder drei Freiheitsgrade;

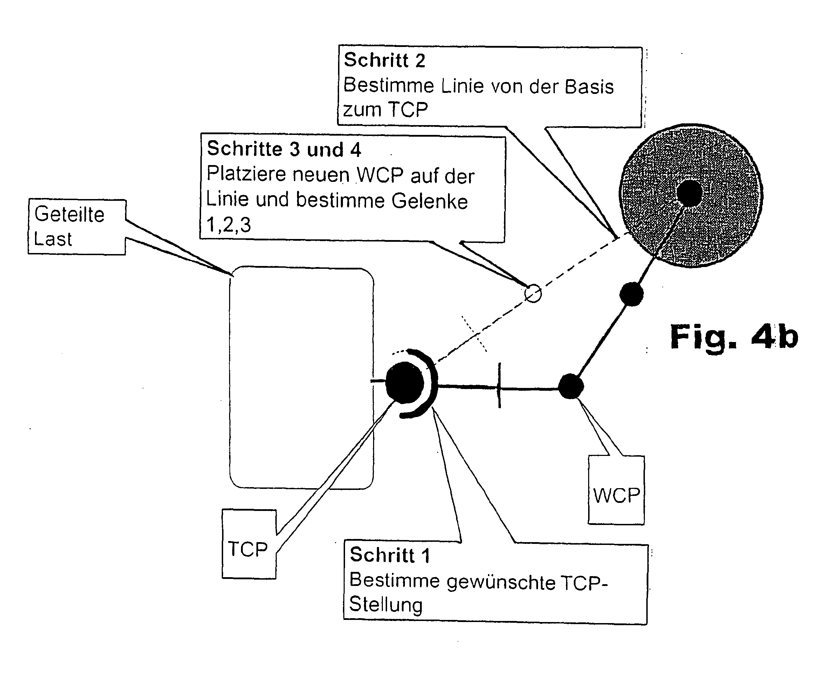

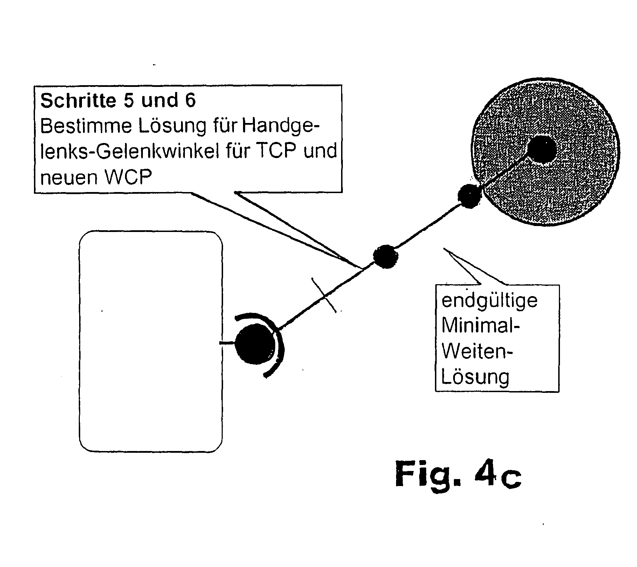

- Fig. 4b,c: in bildlicher Form den Minimal-Weiten-Algo- rithmus für zwei oder drei Freiheitsgrade;

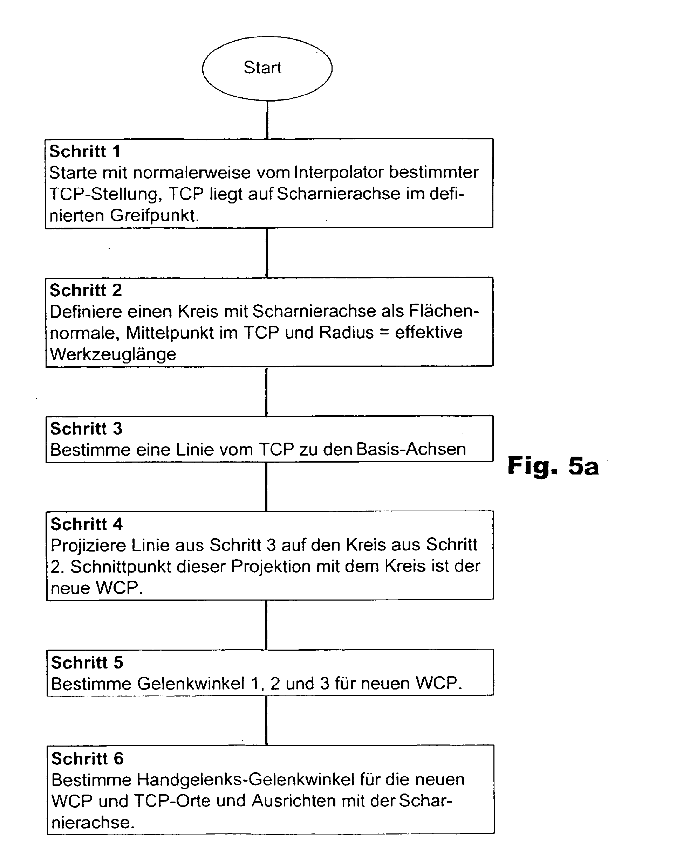

- Fig. 5a: ein Ablaufdiagramm des erfindungsgemäßen Algo- rithmus für einen Freiheitsgrad;

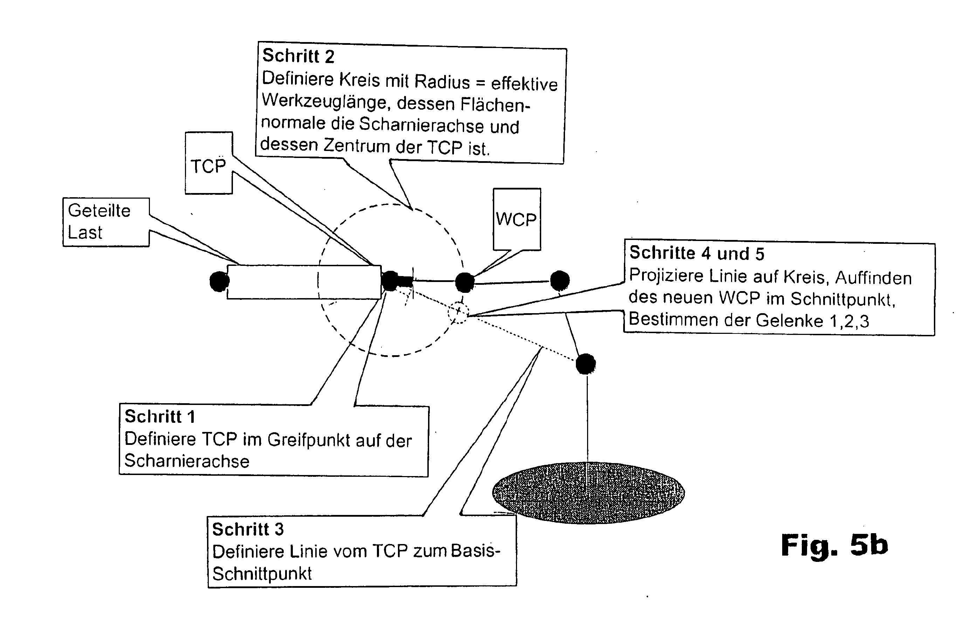

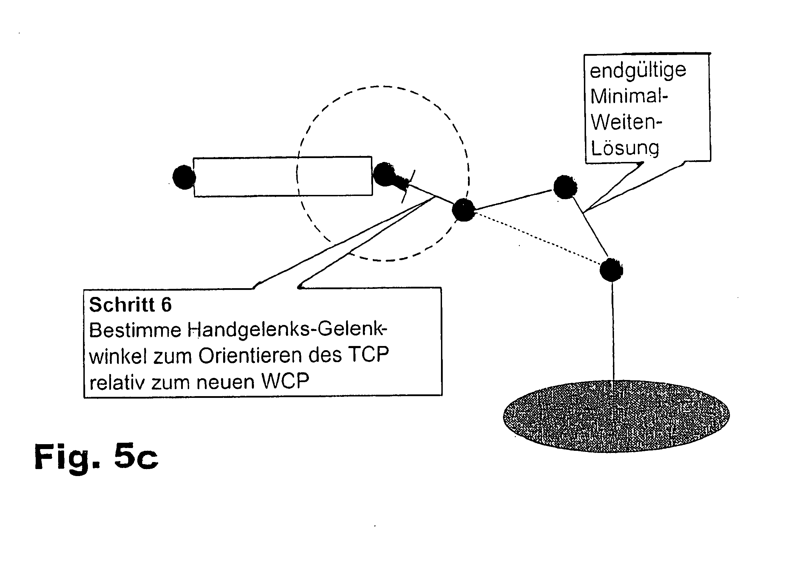

- Fig. 5b,c: in bildlicher Darstellung den Minimal-Weiten- Algorithmus für einen Freiheitsgrad;

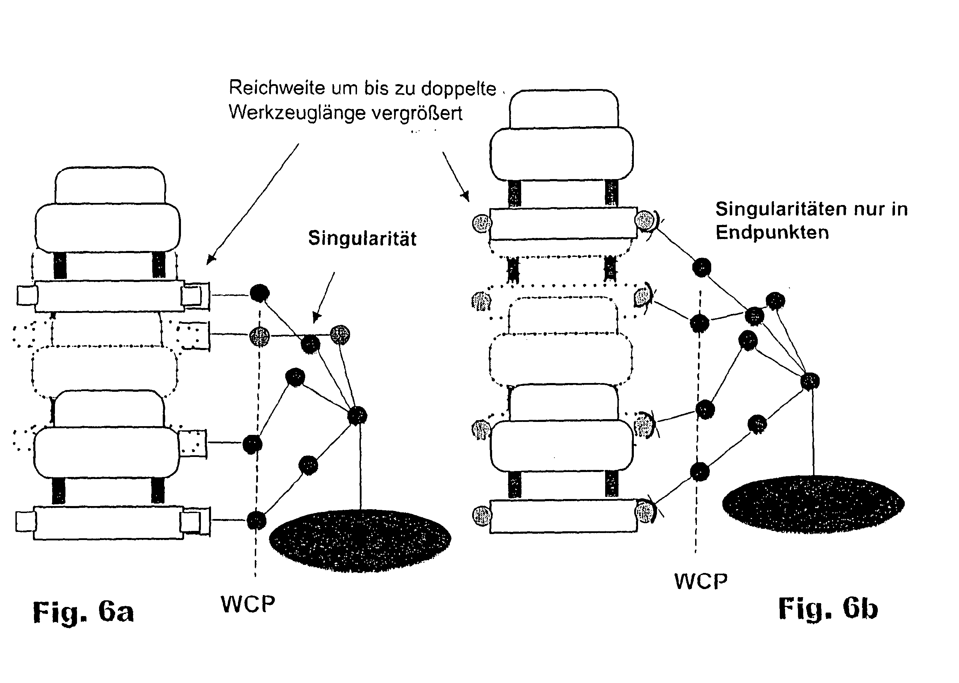

- Fig. 6a,b: einen Vergleich der Standard-Interpolation (Fig. 6a) mit einer Minimal-Weiten-Inter- polation (Fig. 6b) für ein Kugelgelenk; und

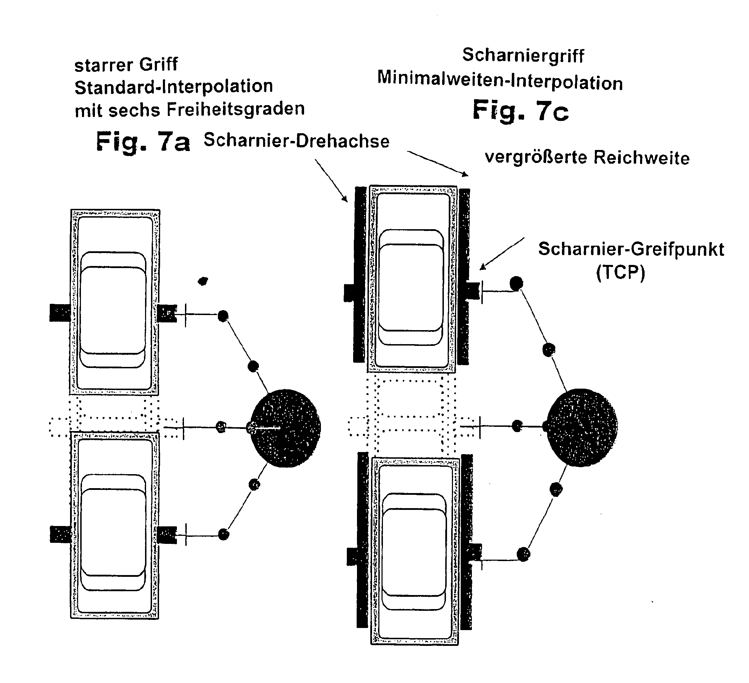

- Fig. 7a-d: einen Vergleich der Standardinterpolation mit einer Minimal-Weiten-Interpolation für ein Scharniergelenk.

### Detaillierte Beschreibung der Erfindung

Ein erfindungsgemäßer Industrieroboter 1 besitzt eine feste Basis 2, die ein Karussell 3 trägt, das um eine vertikale A1-Achse drehbar ist. Ein erster Roboterarm 4 ist um eine horizontale A2-Achse drehbar mit dem Karussell 3 verbunden.

Der erste Roboterarm 4 trägt, um eine horizontale A3-Achse schwenkbar, einen zweiten Roboterarm 5. An dem Arm 5 ist eine Roboterhand 6 befestigt, die dreiteilig ausgebildet ist, wobei die Teile jeweils um eine Achse A4, A5 bzw. A6 drehbar sind. Die Achsen schneiden sich in einem Punkt der Achse A5, bei dem es sich um den Handgelenkspunkt (WCP) für dieses spezielle Roboterdesign handelt. Das freie Ende des Handteils 7 (um die A6-Achse drehbar) ist mit einem Werkzeug 8 versehen, in der gezeigten Ausgestaltung der Erfindung mit einer Gelenkpfanne eines Kugelgelenks.

Wenn ein Werkstück durch einen einzelnen Industrieroboter getragen wird, kommt ein Greifer zum Einsatz, der das Teil in sechs Freiheitsgraden (x, y, z für den Ort sowie Drehungen um die x-, y-, z-Achsen) beschränkt.

Fig. 2a zeigt die Verbindung mit einem Teil 14 über ein Kugelgelenk mit beispielsweise einer über eine Roboterhand 12 mit dem Roboter verbundenen Gelenkpfanne 11 und einer mit dem Teil 14 verbundenen Kugel 13.

Auf diese Weise ist der TCP, das Zentrum der Gelenkpfanne 11, hinsichtlich seiner Stellung (Ort und Orientierung) durch den Roboter fixiert. Die Kugel 13 kann sich in drei Rotations-Freiheitsgraden bewegen. Somit lässt sich das Teil 14 um das Zentrum der Kugel 13 herum in drei Freiheitsgraden frei drehen. Ein solches Werkzeug schränkt nur den Ort ein. (Es beschränkt keine Freiheitsgrade der Orientierung.)

Wenn zwei Kugeln 13 weit beabstandet an dem Teil 14 angeordnet sind (wie in Fig. 2a gezeigt) und zwei Roboter zum Ergreifen des Teils eingesetzt werden, wobei jeder eine Gelenkpfanne 11 bei einer der Kugeln 13 besitzt, kann das Teil 14 noch immer frei um eine Linie zwischen den beiden Bällen 13 rotieren. Um die Orientierung des Teils bei Verwendung von nur zwei Bällen 13 und Gelenkpfannen 11 als Befestigungsvorrichtungen festzulegen, müssen wenigstens drei Roboter zum Tragen des Teils eingesetzt werden. Dies mag in einigen Fällen sinnvoll sein, jedoch wäre eine Lösung zu bevorzugen, die wirksam wird, wenn nur zwei Roboter zum Tragen des Teils 14 eingesetzt werden.

Gemäß der Fig. 2b wird ein Teil 14 durch eine Welle oder ein Scharnier 21 getragen, das auf jeder Seite des Teils 14 angebracht ist. Wenn ein Roboter das Teil 14 durch Ergreifen eines Scharniers 21 aufnimmt, kann das Teil 14 sich nur in einem Freiheitsgrad bewegen, da es nur um die Scharnierachse rotieren kann. Dieses Werkzeug beschränkt den Ort und zwei Freiheitsgrade der Orientierung. Wenn nun zwei Roboter das Teil aufnehmen, wobei jeder ein Scharnier 21 ergreift, ist die Orientierung des Teils 14 festgelegt; es ist in einigen Freiheitsgraden überbeschränkt, nicht jedoch in dem durch die Scharniere 21 freigegebenen Freiheitsgrad.

Eine dritte Art von Werkzeug ist eine Art von Kardangelenk 31, das in Fig. 2c gezeigt ist und Rotationen in zwei Freiheitsgraden ermöglicht, sowie als Kombination von zwei Wellen oder Scharnieren, die jeweils um Achsen unterschiedlicher Orientierung drehbar sind, Rotationen in dem dritten Freiheitsgrad einschränkt oder beschränkt. Ein Teil mit einem Kardangelenk auf jeder Seite könnte ebenfalls durch zwei Roboter getragen werden, wodurch die Überbeschränktheit weiter verbessert wird.

Wie in Fig. 3 gezeigt, kann eine Kombination von Werkzeugtypen verwendet werden. Wenn beispielsweise ein Roboter (nicht gezeigt) das Teil 14 über ein Kardangelenk 31 ergreift und der andere Roboter (nicht gezeigt) über ein Kugelgelenk 13 zugreift, wird ein dritter Roboter nicht benötigt. Der über das Kardangelenk 31 zugreifende Roboter beschränkt die Bewegung um eine Linie zwischen dem Kardangelenk 31 und der Kugel 13, während die anderen beiden Drehungen des Teils durch den Ort der Greifpunkte beschränkt sind, und keine der drei Drehungen ist überbeschränkt.

Während einer normalen Interpolation gemäß dem Stand der Technik wird eine Trajektorie in allen sechs Freiheitsgraden interpoliert. Bei der Lastenteilung mit zwei oder mehr Robotern wird normalerweise ein unabhängiger Roboter und ein abhängiger oder mehrere abhängige Roboter verwendet. Diese Begriffe beziehen sich auf Roboter in geometrisch koordinierten Bewegungen, z.B. bei der Lastenteilung, wie in der am 3. April 2003 eingereichten US-Patentanmeldung 10/406,521 von Stoddard et al. beschrieben, wobei ein Roboter, der unabhängige Roboter, seinem normalen Interpolationsverfahren folgt, während andere, abhängige Roboter sich in Koordinatensystemen bewegen, die sich auf eine Koordinatensystem beziehen, das von dem unabhängigen Roboter "abhängig" und mit diesem verknüft ist, wobei jeder mit einem unabhängigen Roboter verbundene abhängige Roboter lediglich die vollständige Stellung in sechs Freiheitsgraden kopiert, diese von dem unabhängigen Greifpunkt zu dem abhängigen Greifpunkt verschiebt und dann eine Lösung für seine sechs Gelenkwinkel unter Verwendung des gleichen Algorithmus in sechs Freiheitsgraden wie der unabhängige Roboter sucht. Diese Lösungen werden alle innerhalb desselben Servozyklus ermittelt und geben die Gelenkwinkel aller Roboter in demselben Servozyklus aus, wobei für jeden Interpolationszyklus für jeden Roboter eine Lösung ausgegeben wird.

Im Zuge der erfindungsgemäßen Verwendung einer "Weiten-Minimalisierung" wird der unabhängige Roboter die vollständige Trajektorie wie gewöhnlich interpolieren und allen abhängigen Robotern alle sechs Freiheitsgrade der kartesischen Information mitteilen, wie dies gewöhnlich nach dem Stand der Technik geschieht, beispielsweise gemäß der vorstehend genannten US-Patentanmeldung 10/406,521. Selbst angesichts der Tatsache, dass jeder Roboter diese interpolierte Orientierung in seiner endgültigen Lösung ignorieren wird, ist die Orientierung wichtig beim Bestimmen des korrekten Versatzes des Greifpunkts jedes Roboters relativ zum Greifpunkt des unabhängigen Roboters.

Die endgültige Lösung für den TCP jedes Roboters (unabhängiger und aller abhängigen Roboter) erfolgt mittels der Lösung für den Ort des TCP, der durch den Interpolator des unabhängigen Roboters angegeben und für die abhängigen Roboter verschoben ist (oder mitgeteilte und versetzte Glieder-Informationen). Allerdings werden für die Orientierung jedes TCP (den unabhängigen Roboter eingeschlossen) die von dem Standardinterpolator oder aus Glieder-Informationen stammenden Orientierungsinformationen durch optimierte, aus dem Minimal-Weiten-Algorithmus abgeleitete Orientierungsinformationen substituiert.

Für das Kugelgelenk-Werkzeug, das keine Orientierungszwänge auferlegt, ist eine optimierte Orientierung eine solche, die nur geringe oder keine Handgelenks-Winkeländerungen gegenüber dem vorangehenden, interpolierten Wert bewirkt und den Handgelenkspunkt (WCP) so nahe wie möglich am Schnittpunkt der Basisachsen platziert. Im Allgemeinen werden mehrere Sätze von Handgelenkswinkeln das letzte Kriterium erfüllen, so dass das erste Kriterium ein Auswählen des minimalen Bewegungssatzes erforderlich macht, der eine minimale Bewegung der Handgelenks-Gelenke gegenüber den vorherigen, interpolierten Werten bewirkt.

Nachfolgend wird der Algorithmus detailliert Schritt für Schritt bei Anwendung auf Roboter mit einer offenen kinematischen Kette und sechs Freiheitsgraden dargestellt, dessen Handgelenke keinen Versatz besitzen und dessen WCP-Lösung unabhängig von der Handgelenksachsen-Lösung durchführbar ist (ein Kugel-Handgelenk). In der Basis können Achsen-Versatze existieren; der Algorithmus wird durch einen Basis-Versatz nicht verändert.

Dargestellt ist zunächst der Algorithmus für Minimal-Weiten, wenn die Orientierung in allen drei Freiheitsgraden frei ist, wie durch das Kugelgelenkmodell vorgegeben, oder wenn die Orientierung in zwei Freiheitsgraden frei ist, wie durch das Kardangelenk-Modell für das Werkzeug vorgeben.

Die Lösung ist in den Figuren 4a-4c dargestellt und wird wie folgt ausgeführt:
- Schritt 1:: Beginne mit der Stellung (sowohl Ort als auch Orientierung) des TCP vom Interpolator oder ei- ner anderen, vorgegebenen Stellung;
- Schritt 2:: Finde die Linie vom Schnittpunkt der Basis- Drehachse mit der Drehachse des zweiten Ge- lenks, dem "Basisschnittpunkt", zum TCP; (dies ist wahr, selbst wenn zwischen der Basisdreh- achse und der Bewegungsebene der Glieder 2 und 3 ein Versatz existiert (eine versetzte Ba-
- Schritt 3:: sis).) Auffinden des Punktes auf dieser Linie, der ge- nau dem TCP-WCP-Abstand vom TCP (der effektiven Werkzeuglänge) entspricht. Dieser Punkt ist der Ort des neuen WCP;
- Schritt 4:: Ermittle die Robotergelenke 1, 2 und 3 für den vorstehend identifizierten WCP gemäß der Stan- dardlösung für den WCP, wie sie in jedem Lehr- buch über Rückwärtsrechnungen bei Roboterkine- matiken dargestellt ist.
- Schritt 5:: Auffinden der Gelenkwinkel des Roboter-Handge- lenks, die den TCP relativ zu dem identifizier- ten WCP korrekt anordnen. Auf diese Weise bleibt ein Freiheitsgrad der Drehung um die Li- nie vom WCP zum TCP frei. Allerdings ist in der Praxis eine Gelenkpfanne nicht vollständig frei bezüglich der Rotation um eine Kugel, und der tatsächliche Werkzeugzwang kann helfen, die endgültige Drehung zu bestimmen. Für ein Kar- dangelenk ist die endgültige Drehung durch die Festdrehung des Kardangelenks festgelegt. Für das Kardangelenk wird die endgültige Drehung durch die Orientierung des Kardangelenks rela- tiv zu der Befestigung oder der getragenen Last bestimmt. Für das Kugelgelenk ist auch die end- gültige Drehung frei und sollte so ausgewählt werden, dass sie in der Nähe ihres Wertes aus vorangehenden Interpolationszyklen liegt oder diesen entspricht.
- Schritt 6:: Wenn mehrfache Lösungen in den ersten vier Schritten existieren, wähle die Gelenkwinkel des Roboter-Handgelenks, die Werten aus voran- gehenden Interpolationszyklen am nächsten lie- gen.

Nachfolgend wird der Algorithmus gemäss den Figuren 5a-c dargestellt, wobei angenommen wird, dass nur ein Freiheitsgrad der Orientierung frei ist, wie durch ein Scharniermodell für das Werkzeug vorgegeben:
- Schritt 1:: Definiere den TCP auf der Scharnierachse am Ort des definierten Greifpunkts auf der Scharnier- achse.
- Schritt 2:: Definiere einen Kreis, dessen Mittelpunkt der TCP ist und dessen Ebene durch die Scharnier- achse definiert ist. Der Radius des Kreises ist durch den Abstand zwischen TCP und WCP defi- niert (effektive Werkzeuglänge).
- Schritt 3:: Auffinden der Linie von dem Roboter-Basis- Schnittpunkt zum TCP wie im Fall des Kugelge- lenks.
- Schritt 4:: Projiziere die vorstehend genannte Linie auf die Ebene des vorstehend definierten Kreises.
- Schritt 5:: Der Schnittpunkt des Kreises mit der projizier- ten Linie ist der gewünschte Ort des WCP. Er stellt den Schnittpunkt des Kreises mit der kleinstmöglichen Kugel um den Roboter-Basis- schnittpunkt (die Minimalweite des WCP, die den Kreis berührt) dar. Ermitteln der Lösungen für (Bestimmen der) Robotergelenke 1, 2 und 3 wie im Falle des Kugelgelenks (standardmäßige Lehr- buchlösung).
- Schritt 6:: Ermitteln der Lösung für die Handgelenks- Gelenkwinkel, die den TCP relativ zum WCP kor- rekt anordnen. Auf diese Weise verbleibt eine freie Drehbewegung, die durch Ausrichtung der Scharnierachse festgelegt werden kann.
Bei korrekter Anordnung der Werkzeuge wird die Verwendung der beiden vorstehenden Lösungen für Scharniergelenks-, Kardangelenks- und/oder Kugelgelenks-Werkzeuge für jeden Punkt entlang einer Trajektorie auch Singularitäten des Handgelenks entlang der Trajektorie vermeiden.

Die Figuren 6a und 6b zeigen einen vergleich des Anhebens eines Teils, hier eines Autos, unter Verwendung eines starren Greifers (Figur 6a), der das Auto unter Verwendung von Kugelgelenks-Verbindungen anhebt, und des Minimal-Weiten-Algorithmus (Figur 6b). Das Auto wird entlang einer vertikalen Linie von einer unteren Stellung in eine obere Stellung getragen. Bei Interpolation unter Anwendung eines starren Greifers und einer standardgemäßen Rückwärtsrechnung (Figur 6a) ist die Reichweite begrenzt, da die Orientierung immer derjenigen des Auto-Trägers (horizontal) entsprechen muss. Zusätzlich muss sich das Handgelenk in die Nähe einer Singularität bewegen. Bei Rückwärtsrechnung einer Kugelgelenks-Verbindung zusammen mit einer Minimalweite bleibt das Handgelenk auf einer Linie mit dem Roboter-Basisschnittpunkt und gelangt niemals in die Nähe einer Singularität, mit Ausnahme der extremen Reichweiten-Grenzen, so dass dementsprechend kein Problem auftritt. Die Reichweite ist vergrößert, da das Handgelenk nicht horizontal ausgerichtet bleiben muss.

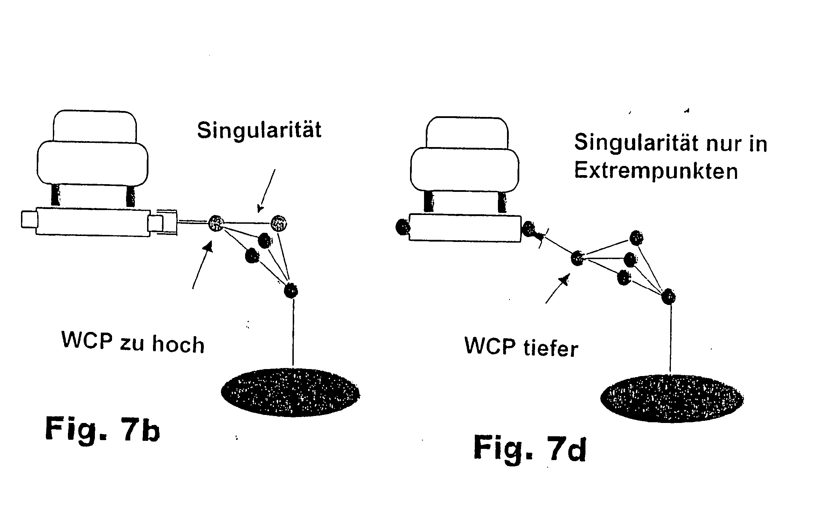

Die Figuren 7a bis 7d zeigen einen Vergleich der standardgemäßen Lösung der Rückwärtsrechnung beim Transportieren eines Teils, z.B. eines Autos, mit einem starren Greifer gegenüber der Minimal-Weiten-Lösung der Rückwärtsrechnung unter Verwendung von Scharnierverbindungen zwischen dem Roboter und dem Auto-Träger. Die Figuren 7a und 7c zeigen Draufsichten, wohingegen die Figuren 7b und 7d Seitenansichten zeigen. Das Handgelenk ist stärker eingeschränkt als bei Verwendung des Kugelgelenks, kann aber realistisch mit zwei eine Last teilenden Roboter eingesetzt werden. Das Diagramm zeigt Drauf- und Seitenansichten derselben horizontalen Bewegung. Diese ist bei einer Höhe dargestellt, die im Falle einer standardgemäßen Lösung der Rückwärtsrechnung ein Problem ergeben würde, da sie in die Nähe einer Singularität kommt. Im Falle der Minimal-Weiten-Lösung der Rückwärtsrechnung existiert kein solches Problem, mit Ausnahme der absoluten Extrempunkte. Es ergibt sich außerdem eine Reichweitenvergrößerung für die Minimalweiten-Lösung im Vergleich mit der Standardlösung der Rückwärtsrechnung, da der Handgelenkspunkt in den Extrempunkten tiefer liegt.

## Patentansprüche

1. Verfahren zum Steuern eines Roboters während einer Interpolation einer Trajektorie oder Bewegung zu einer vorbestimmten Stellung, beinhaltend die Schritte:
a) Ignorieren von wenigstens einem der drei ursprünglich vorbestimmten oder interpolierten Orientierungswerte einer Werkzeugspitze;
b) Auffinden neuer Orientierungswerte der Werkzeugspitze, wobei
c) die ursprünglich vorbestimmten oder interpolierten Ortswerte der Werkzeugspitze beibehalten werden, **dadurch gekennzeichnet, dass** die neuen Orientierungswerte den Handgelenkspunkt des Roboters möglichst nah an dessen Basis platzieren, und die ursprünglich vorbestimmten oder interpolierten, nicht ignorierten Orientierungswerte der Werkzeugspitze beibehalten werden.

2. Verfahren nach Anspruch 1, **dadurch gekennzeichnet, dass** Schritt b) mittels eines Weiten-Minimierungsalgorithmus durchgeführt wird.

3. Verfahren nach Anspruch 1 oder 2, **dadurch gekennzeichnet, dass** die Orientierung der Werkzeugspitze in zwei Freiheitsgraden beschränkt bleibt, jedoch um eine einzelne Achse frei rotieren kann, so dass die freie Achse gemäß Schritt a) ignoriert werden kann.

4. Verfahren nach Anspruch 1 oder 2, **dadurch gekennzeichnet, dass** die Orientierung der Werkzeugspitze ein einem Freiheitsgrad beschränkt ist, jedoch um zwei Achsen frei rotieren kann, so dass die freien Achsen gemäß Schritt a) ignoriert werden können.

5. Verfahren nach Anspruch 1 oder 2, **dadurch gekennzeichnet, dass** die Orientierung der Werkzeugspitze um alle drei Achsen frei rotieren kann, so dass die freien Achsen gemäß Schritt a) ignoriert werden können.

6. Vorrichtung zum Steuern eines Roboters (1) zur Verwendung während einer Interpolation eines Trajektorie oder Bewegung zu einer vorbestimmten Stellung, das ausgebildet ist:
a) zum Ignorieren wenigstens einer der drei ursprünglich vorbestimmten oder interpolierten Orientierungswerte der Werkzeugspitze;
b) Auffinden neuer Orientierungswerte der Werkzeugspitze, unter
c) Beibehaltung der ursprünglich vorbestimmten oder interpolierten Ortswerte der Werkzeugspitze, **gekennzeichnet durch**
Platzierung des Handgelenkspunktes des Roboters möglichst nah an dessen Basis **durch** die neuen Orientierungswerte, und Beibehaltung der ursprünglich vorbestimmten oder interpolierten, nicht ignorierten Orientierungswerte der Werkzeugspitze.

7. Vorrichtung nach Anspruch 6, **gekennzeichnet durch** einen Weiten-Minimierungsalgorithmus zum Bestimmen neuer Orientierungswerte der Werkzeugspitze.

8. Vorrichtung nach Anspruch 6 oder 7, **gekennzeichnet durch** Beschränkung der Orientierung der Werkzeugspitze in zwei Freiheitsgraden und freies Rotieren um eine einzelne Achse, so dass die freie Achse gemäß a) ignorierbar ist.

9. Vorrichtung nach Anspruch 6 oder 7, **gekennzeichnet durch** Beschränkung der Orientierung der Werkzeugspitze in einem Freiheitsgrad und freies Rotieren um zwei Achsen, so dass die freien Achsen gemäß a) ignorierbar ist.

10. Vorrichtung nach Anspruch 6 oder 7, **gekennzeichnet durch** freies Rotieren der Orientierung der Werkzeugspitze um alle drei Achsen, so dass die freien Achsen gemäß a) ignorierbar sind.

11. Vorrichtung nach einem der Ansprüche 6 bis 10, **dadurch gekennzeichnet, dass** der Roboter (1) mit einem zweiten Roboter einer Last (14) trägt, die über ein Kardangelenk (31) und/oder ein Kugelgelenk (13) und/oder ein Scharniergelenk (21) mit einem der Roboter verbunden ist.

## Claims

1. A method for controlling a robot during an interpolation of a trajectory or movement to a predetermined position, comprising the following steps:
a) Ignoring at least one of the originally predetermined or interpolated orientation values of a tool tip;
b) finding new orientation values of the tool tip, wherein
c) the originally predetermined or interpolated location values of the tool tip are maintained, **characterised in that** the new orientation values place the hand articulation point of the robot as close as possible to its base, and **in that** the originally predetermined or interpolated, non-ignored orientation values of the tool tip are maintained.

2. The method according to Claim 1, **characterised in that** step b) is carried out by means of a width minimisation algorithm.

3. The method according to Claim 1 or 2, **characterised in that** the orientation of the tool tip remains limited to two degrees of freedom, but is able to rotate freely about an individual axis so that the free axis can be ignored according to step a).

4. The method according to Claim 1 or 2, **characterised in that** the orientation of the tool tip is limited to one degree of freedom, but is able to rotate freely about two axes so that the free axes can be ignored according to step a).

5. The method according to Claim 1 or 2, **characterised in that** the orientation of the tool tip is able to rotate freely about all three axes so that the free axes can be ignored according to step a).

6. A device for controlling a robot (1) for use during an interpolation of a trajectory or movement to a predetermined position, which is designed:
a) to ignore at least one of the three originally predetermined or interpolated orientation values of the tool tip;
b) to find new orientation values of the tool tip, whilst
c) maintaining the originally predetermined or interpolated location values of the tool tip,
**characterised by** placing the hand articulation point of the robot as close as possible to its base by the new orientation values and by maintaining the originally predetermined or interpolated, non-ignored orientation values of the tool tip.

7. The device according to Claim 6, **characterised by** a width minimisation algorithm to determine new orientation values of the tool tip.

8. The device according to Claim 6 or 7, **characterised by** limiting the orientation of the tool tip to two degrees of freedom and free rotation about an individual axis so that the free axis can be ignored according to a).

9. The device according to Claim 6 or 7, **characterised by** limiting the orientation of the tool tip to one degree of freedom and free rotation about two axes so that the free axes can be ignored according to a).

10. The device according to Claim 6 or 7, **characterised by** free rotation of the orientation of the tool tip about all three axes so that the free axes can be ignored according to a).

11. The device according to any one of Claims 6 to 10, **characterised in that** the robot (1) carries with a second robot a load (14) which is connected to a robot by a cardan joint (31) and/or a ball joint (13) and/or a hinged joint (21).

## Revendications

1. Procédé pour commander un robot pendant l'interpolation d'une trajectoire ou d'un déplacement vers une position prédéfinie, comprenant les étapes suivantes :
a) ignorer au moins une des trois valeurs d'orientation prédéfinies ou interpolées à l'origine d'une pointe d'outil ;
b) trouver de nouvelles valeurs d'orientation de la pointe d'outil ;
c) en conservant les valeurs locales prédéfinies ou interpolées à l'origine de la pointe d'outil, **caractérisé en ce que** les nouvelles valeurs d'orientation placent le point d'articulation de la main du robot le plus près possible de sa base et que les valeurs d'orientation prédéfinies ou interpolées à l'origine non ignorées de la pointe d'outil sont conservées.

2. Procédé selon la revendication 1, **caractérisé en ce que** l'étape b) est réalisée à l'aide d'un algorithme de minimisation des largeurs.

3. Procédé selon la revendication 1 ou 2, **caractérisé en ce que** l'orientation de la pointe d'outil reste limitée selon deux degrés de liberté tout en pouvant tourner librement autour d'un axe unique, de façon à pouvoir ignorer l'axe libre selon l'étape a).

4. Procédé selon la revendication 1 ou 2, **caractérisé en ce que** l'orientation de la pointe d'outil est limitée à un degré de liberté tout en pouvant tourner librement autour de deux axes, de façon à pouvoir ignorer les axes libres selon l'étape a).

5. Procédé selon la revendication 1 ou 2, **caractérisé en ce que** l'orientation de la pointe d'outil peut tourner librement autour de trois axes, de façon à pouvoir ignorer les axes libres selon l'étape a).

6. Dispositif pour commander un robot (1) à utiliser pendant une interpolation d'une trajectoire ou un déplacement vers une position prédéfinie, réalisé :
a) pour ignorer au moins une des trois valeurs d'orientation prédéfinies ou interpolées à l'origine de la pointe d'outil ;
b) trouver de nouvelles valeurs d'orientation de la pointe d'outil ;
c) en conservant les valeurs locales prédéfinies ou interpolées à l'origine de la pointe d'outil, **caractérisé par** le placement du point d'articulation de la main du robot le plus près possible de sa base du fait des nouvelles valeurs d'orientation, et en conservant les valeurs d'orientation prédéfinies ou interpolées à l'origine non ignorées de la pointe d'outil.

7. Dispositif selon la revendication 6, **caractérisé par** un algorithme de minimisation des largeurs permettant de déterminer de nouvelles valeurs d'orientation de la pointe d'outil.

8. Dispositif selon la revendication 6 ou 7, **caractérisé par** la limitation de l'orientation de la pointe d'outil selon deux degrés de liberté et par la rotation libre autour d'un axe unique, de façon à pouvoir ignorer l'axe libre selon l'étape a).

9. Dispositif selon la revendication 6 ou 7, **caractérisé par** la limitation de l'orientation de la pointe d'outil selon un degré de liberté et par la rotation libre autour de deux axes, de façon à pouvoir ignorer les axes libres selon l'étape a).

10. Dispositif selon la revendication 6 ou 7, **caractérisé par** la libre rotation de l'orientation de la pointe d'outil autour des trois axes, de façon à pouvoir ignorer les axes libres selon l'étape a).

11. Dispositif selon l'une quelconque des revendications 6 à 10, **caractérisé en ce que** le robot (1) porte avec un deuxième robot une charge (14) reliée à un des robots via une articulation à cardan (31) et/ou une articulation à rotule (13) et/ou une articulation à charnière (21).
